# EUROPEAN PATENT SPECIFICATION

(11) **EP 2 651 986 B1**
(45) Date of publication and mention of the grant of the patent: **24.07.2019**
(21) Application number: 11797315.6
(22) Date of filing: 14.12.2011
(51) Int. Cl.: C08F 10/00, C08F 4/659

(54) **METHOD OF PREPARING METALLOCENE CATALYSTS**
VERFAHREN ZUR HERSTELLUNG EINES METALLOCEN-KATALYSATORS
PROCÉDÉ DE PRÉPARATION DE CATALYSEURS MÉTALLOCÈNES

(30) Priority: 15.12.2010 EP 10015747; 11.02.2011 US 201161441723 P
(43) Date of publication of application: 23.10.2013
(73) Proprietor: Basell Polyolefine GmbH, 50389 Wesseling (DE)
(72) Inventor: RICHTER, Bodo, 65719 Hofheim (DE); GREGORIUS, Heike, 56075 Koblenz (DE)
(74) Representative: Sacco, Marco
(86) International application number: PCT/EP2011/072688
(87) International publication number: WO 2012/080294

(56) References cited:
- WO-A1-98/40418
- WO-A1-02/098930
- WO-A1-2009/043867
- DE-A1- 19 804 970
- ATIQULLAH ET AL: "Influence of silica calcination temperature on the performance of supported catalyst SiO2-<n>BuSnCl3/MAO/(<n>BuCp)2ZrCl2 polymerizing ethylene without separately feeding the MAO cocatalyst", APPLIED CATALYSIS A: GENERAL, ELSEVIER SCIENCE, AMSTERDAM, NL, vol. 320, 20 March 2007 (2007-03-20), pages 134-143, XP005912353, ISSN: 0926-860X, DOI: 10.1016/J.APCATA.2007.01.023

## Description

The invention relates to ways to prepare metallocene catalysts useful for polymerizing olefins.

While Ziegler-Natta catalysts are a mainstay for polyolefin manufacture, single-site catalysts represent the industry's future. These catalysts open possibility to produce polymers with improved physical properties. The improved properties include controlled molecular weight distribution, reduced low molecular weight extractables, enhanced incorporation of α-olefin comonomers, lower polymer density, controlled content and distribution of long-chain branching, and modified melt rheology and relaxation characteristics.

A well known kind of single-site catalyst leading to a variety of polyolefin products is a metallocene catalyst which generally is activated with MAO. In special processes, such as e.g. the Spheripol process this kind of catalyst systems tend to cause reactor fouling due to leaching of activated metallocene in the presence of alkyl aluminum, which is used as scavenger. Thus in these processes, MAO activated metallocene catalysts require the absence of any scavenger and therefore lack in catalyst mileage due to traces of poisons (H₂O, CO₂, CO) in the polymerization process. Increasing the mileage capability and robustness of the metallocene MAO catalyst is most desirable to improve metallocene MAO catalyst efficiency.

WO 98/40418 relates to a catalyst system for polymerizing C2 to C12-alk-1-enes containing; A) one organic or inorganic support; B) at least one metallocene complex; C) oligomeric aluminum oxide compounds; D) at least one boron compound.

Therefore, it is an object of the present invention to provide a particularly valuable method for preparing supported catalyst systems comprising metallocenes which provide high activity for polymerizing olefins without use of alkyl aluminum.

The invention relates to methods for preparing supported catalysts useful for polymerizing olefins. The catalysts comprise a metallocene complex that incorporates a cyclopentadienyl ligand. In the inventive method, bis(pentafluorophenyl) borinic acid is first combined with excess alkylalumoxane to produce an activator mixture. This activator mixture is then combined with either: (i) the metallocene complex described above, followed by calcined or chemically treated silica to give a supported catalyst; or (ii) calcined or chemically treated silica, followed by the metallocene complex to give a supported catalyst. The supported catalysts allow
efficient polymerization to produce polyolefins without leading to any leaching of activated metallocene.

Catalysts prepared by the method of the invention are particularly useful for polymerizing olefins. They comprise an activated metallocene complex, preferably, a complex of a transition metal of group 4 of the Periodic Table of the Elements. Group 4 metals include zirconium, titanium, and hafnium. Zirconium and hafnium are preferred. Zirconium is particularly preferred.

The first step in the inventive method involves preparation of an activator mixture. This mixture is produced by combining bis(pentafluorophenyl) borinic acid with excess alkylalumoxane.

Suitable alkylalumoxanes are well known and many are commercially available as solutions in hydrocarbon solvents from Albemarle, Akzo Nobel, and other suppliers. Examples include methylalumoxane, ethylalumoxane, Methylalumoxanes, such as MAO, MMAO, or PMAO are particularly preferred.

The alkylalumoxane is used in excess compared with the amount of bis(pentafluorophenyl) borinic acid Preferably, the alkylalumoxane and bis(pentafluorophenyl) borinic acid are used in amounts that provide an aluminum to boron (Al/B) molar ratio within the range of 2 to 50, more preferably from 5 to 40, most preferably from 8 to 35.

In one method of the invention, the activator mixture is combined with a metallocene complex, followed by calcined or chemically treated silica to give the supported catalyst. In a second method, the order is reversed, i.e., the activator mixture is combined first with the calcined or chemically treated silica, followed by the metallocene complex.

Thus, suitable metallocene complexes include a cyclopentadienyl ligand.

The metallocenes suitable for the catalyst systems produced by the method of the present invention are metallocenes of transition metals of group 3, 4, 5 or 6 of the Periodic Table of the Elements, preferable of transition metals of group 4 of the Periodic Table of the Elements. More preferred are metallocene compounds having two different π-ligands.

Particular preference is given to catalyst systems based on metallocene compounds of the formula (I), 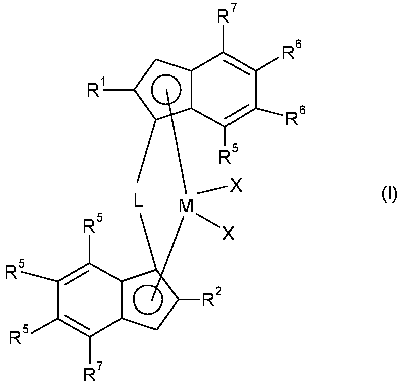 where
- M: is zirconium, hafnium or titanium, preferably zirconium,
- X: are identical or different and are each, independently of one another, hydrogen or halogen or an -R, -OR, -OSO₂CF₃, -OCOR, -SR, -NR₂ or -PR₂ group, where R is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, preferably C₁-C₁₀-alkyl such as methyl, ethyl, n-propyl, isopropyl, n-butyl, isobutyl, sec-butyl, tert-butyl, n-pentyl, n-hexyl, n-heptyl or n-octyl or C₃-C₂₀-cycloalkyl such as cyclopentyl or cyclohexyl, where the two radicals X may also be joined to one another and preferably form a C₄-C₄₀-dienyl ligand, in particular a 1,3-dienyl ligand, or an -OR'O- group in which the substituent R' is a divalent group selected from the group consisting of C₁-C₄₀-alkylidene, C₆-C₄₀-arylidene, C₇-C₄₀-alkylarylidene and C₇-C₄₀-arylalkylidene, where X is preferably a halogen atom or an -R or -OR group or the two radicals X form an -OR'O- group and X is particularly preferably chlorine or methyl,
- L: is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, which may contain heteroatoms of groups 13-17 of the Periodic Table of the Elements, or a silylidene group having up to 5 silicon atoms, e.g. -SiMe₂- or -SiPh₂-, where L preferably is a radical selected from the group consisting of -SiMe₂-, -SiPh₂-, -SiPhMe-, -SiMe(SiMe₃)-, -CH₂-, -(CH₂)₂-, -(CH₂)₃- and-C(CH₃)₂-,
- R¹: is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R¹ is preferably unbranched in the α position and is preferably a linear or branched C₁-C₁₀-alkyl group which is unbranched in the α position, in particular a linear C₁-C₄-alkyl group such as methyl, ethyl, n-propyl or n-butyl,
- R²: is a group of the formula -C(R³)₂R⁴, where
- R³: are identical or different and are each, independently of one another, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring, where R³ is preferably a linear C₁-C₁₀-alkyl group, and
- R⁴: is hydrogen, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁴ is preferably hydrogen,
- R⁵: are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁵ is preferably hydrogen or a linear or branched C₁-C₁₀-alkyl group, in particular hydrogen, and
- R⁶: are identical or different and are each, independently of one another hydrogen, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or the two radicals R⁶ may be joined to form together with the atoms connecting them a saturated or unsaturated C₅-C₂₀ ring, where preferably R⁶ is hydrogen or two R⁶ preferably are joined to form a saturated or unsaturated C₅-C₁₄ ring,
- R⁷: are identical or different and are each, independently of one another, halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁷ is preferably an aryl group of the formula (II), 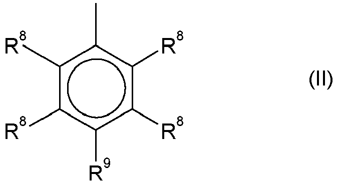 where
R⁸ are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R⁸ may be joined to form a saturated or unsaturated C₃-C₂₀ ring, where R⁸ is preferably a hydrogen atom, and
R⁹ is hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁸ is preferably a branched alkyl group of the formula -C(R¹⁰)₃, where
R¹⁰ are identical or different and are each, independently of one another, a linear or branched C₁-C₆-alkyl group or two or three of the radicals R¹⁰ are joined to form one or more ring systems.

Examples of preferred metallocene compounds are
dimethylsilanediyl(2-methyl-4-(4'-tert-butylphenyl)indenyl)(2-isopropyl-4-(4'-tert-butylphenyl)indenyl) zirconium dichloride,
dimethylsilanediyl(2-methyl-4-(4'-tert-butylphenyl)indenyl)(2-isopropyl-4-(4'-tert-butylphenyl)indenyl) zirconium dimethyl,
dimethylsilanediyl (2-ethyl-4-(4'-tert-butylphenyl)indenyl)(2-isopropyl-4-(4'-tert-butylphenyl)indenyl) zirconium dichloride,
dimethylsilanediyl (2-ethyl-4-(4'-tert-butylphenyl)indenyl)(2-isopropyl-4-(4'-tert-butylphenyl)indenyl) zirconium dimethyl
dimethylsilanediyl (2-methyl-4-phenyl-1-indenyl)(2-isopropyl-4-(4'-tert-butylphenyl)-1-indenyl) zirconium dichloride,
dimethylsilanediyl (2-methyl-4-phenyl-1-indenyl)(2-isopropyl-4-(4'-tert-butylphenyl)-1-indenyl) zirconium dimethyl
dimethylsilanediyl (2-isopropyl-4-(4'-tert-butylphenyl)indenyl)(2-methyl-4,5-benzindenyl) zirconium dichloride,
dimethylsilanediyl (2-isopropyl-4-(4'-tert-butylphenyl)indenyl)(2-methyl-4,5-benzindenyl) zirconium dimethyl
dimethylsilanediyl (2-methyl-4-(4'-tert-butylphenyl)indenyl)(2-isopropyl-4-(1-naphthyl)indenyl) zirconium dichloride,
dimethylsilanediyl (2-methyl-4-(4'-tert-butylphenyl)indenyl)(2-isopropyl-4-(1-naphthyl)indenyl) zirconium dimethyl
dimethylsilanediyl(2-methyl-4-(4'-tert-butylphenyl)indenyl)(2-isopropyl-4-phenylindenyl) zirconium dichloride,
dimethylsilanediyl(2-methyl-4-(4'-tert-butylphenyl)indenyl)(2-isopropyl-4-phenylindenyl) zirconium dimethyl,
dimethylsilanediyl(2-ethyl-4-(4'-tert-butylphenyl)indenyl)(2-isopropyl-4-phenyl)indenyl) zirconium dichloride,
dimethylsilanediyl(2-ethyl-4-(4'-tert-butylphenyl)indenyl)(2-isopropyl-4-phenyl)indenyl) zirconium dichloride,
dimethylsilanediyl(2-isopropyl-4-(4'-tert-butylphenyl)indenyl)(2-methyl-4-(1-naphthyl)indenyl) zirconium dichloride,
dimethylsilanediyl(2-isopropyl-4-(4'-tert-butylphenyl)indenyl)(2-methyl-4-(1-naphthyl)indenyl) zirconium dimethyl and mixtures thereof.

Catalysts made by the method of the invention are preferably supported on silica. The silica generally has a surface area in the range of about 10 to about 1000 m²/g, preferably from about 50 to about 800 m²/g and more preferably from 200 to 700 m²/g. Preferably, the pore volume of the silica is in the range of 0.05 to 4.0 mL/g, more preferably from 0.08 to 3.5 mL/g, and most preferably from 0.1 to 3.0 mL/g. Preferably, the average particle size of the silica is in the range of 1 to 500 µm, more preferably from 2 to 200 µm, and most preferably from 2 to 45 µm. The average pore diameter is typically in the range of 0.05 to 10 µm, preferably 0.1 to 5 µm, and most preferably 0.2 to 3.5 µm.

The silica is calcined, chemically treated, or both prior to use to reduce the concentration of surface hydroxyl groups. Calcination involves heating the support in a dry atmosphere at elevated temperature, preferably greater than 200°C, more preferably greater than 500°C, and most preferably from about 250 to about 800°C, prior to use. A variety of different chemical treatments can be used, including reaction with organoaluminum, -magnesium, -silicon, or -boron acid compounds. See, for example, the techniques described in U.S. Pat. No. 6,211,311, . Preferably, the silica is simply calcined prior to use.

Although there are many ways to combine complexes and activators, it is usually far from clear which methods will prove most satisfactory for a particular type of olefin polymerization catalyst. We surprisingly found that metallocene complexes are effectively activated using combinations of boron acid compounds and alkylalumoxanes when the activator components are precombined. Later combination with complex and calcined or chemically treated silica as outlined above provides catalysts with excellent activities for polymerizing olefins.

The following examples merely illustrate the invention.

### Examples

The weight average molar mass M_{w} and the molar mass distribution M_{w}/Mₙ were determined by gel permeation chromatography (GPC) at 145°C in 1,2,4-trichlorobenzene using a GPC apparatus 50C from Waters. The data were evaluated using the Win-GPC software from HS-Entwicklungsgesellschaft für wissenschaftliche Hard- und Software mbH, Ober-Hilbersheim. Calibration of the columns was carried out by means of polypropylene standards having molar masses of from 100 to 10⁷ g/mol.

The melting points were determined by means of DSC (differential scanning calorimetry). The measurement was carried out in accordance with ISO standard 3146 using a first heating at a heating rate of 20°C per minute to 200°C, a dynamic crystallization at a cooling rate of 20°C per minute down to 25°C and a second heating at a heating rate of 20°C per minute back to 200°C. The melting point is then the temperature at which the enthalpy vs. temperature curve measured in the second heating displays a maximum.

### Example 1

### a) Synthesis of the modified MAO

80 ml of MAO (30 wt % in toluene) were diluted with 100 ml of toluene and cooled to
0°C. In a separate flask, 18.4 g of bis(pentafluorophenyl) borinic acid were dissolved in 250 ml of toluene and added to the MAO / toluene solution in such a way, that the reaction temperature did not exceed 2°C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst A

10 g of silica support (Grace XPO2326, dried at 130 °C for 6h) were suspended in 100 ml of toluene. The suspension was cooled to 0°C and treated with 130 ml of the modified MAO solution described in Example 1a. During the addition, the reaction temperature was kept at 0°C and afterwards raised to 25°C. After continuous stirring for 1 hour, the suspension was filtered and washed 3 times with 100 ml portions of toluene and again suspended in 100 ml of toluene. In a separate flask 248 mg of rac-dimethyl-silanediyl(2-methyl-4-(4'-tert-butylphenyl)indenyl)(2-isopropyl-4-(4'-tertbutyl-phenyl) indenyl)zirconium dimethyl were dissolved in 40 ml of toluene and at ambient temperature treated with 13 ml of the modified MAO solution described in Example 1a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 60°C. This procedure was repeated 2 times. At last the remaining solid was suspended in 100 ml of n-heptane, stirred for 30 min at 60 °C and filtered. The residue was dried in vacuum until its weight remained constant. 19 g of a free flowing powder were obtained.

### c) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 85 mg of neat catalyst A prepared in example 1b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 2280 g of a finely divided polymer were obtained. The interior walls of the reactor displayed no deposits. The catalyst activity was 26.8 kg of PP/g of catalyst solid per hour. The polypropylene obtained had the following properties: M_{w} = 274.000 g/mol, M_{w}/Mₙ = 3.7, melting point = 156°C.

### Example 2

### a) Synthesis of the modified MAO

55 ml of MAO (30 wt % in toluene) were diluted with 150 ml of toluene and cooled to 0°C. In a separate flask, 6.3 g of bis(pentafluorophenyl) borinic acid were dissolved in 90 ml of toluene and added to the MAO / toluene solution in such a way, that the reaction temperature did not exceed 2 °C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst B

10 g of silica support (Grace XPO2326, dried at 130 °C for 6h) were suspended in 100 ml of toluene. The suspension was cooled to 0°C and treated with 153 ml of the modified MAO solution described in Example 2a. During the addition, the reaction temperature was kept at 0°C and afterwards raised to 25 °C. After continuous stirring for 1 hour, the suspension was filtered and washed 3 times with 100 ml portions of toluene and again suspended in 100 ml of toluene. In a separate flask 248 mg of rac-dimethylsilanediyl(2-methyl-4-(4'-tert-butylphenyl)indenyl)(2-isopropyl-4-(4'-tetrbutylphenyl) indenyl)zirconium dimethyl were dissolved in 40 ml of toluene and at ambient temperature treated with 15,3 ml of the modified MAO solution described in Example 2a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 60 °C. This procedure was repeated 2 times. The residue was dried in vacuum until its weight remained constant. 15 g of a free flowing powder were obtained.

### c) Polymerization

A dry 14 l reactor was flushed 3 times with nitrogen and 3 times with propylene and subsequently charged with 306 mg of hydrogen and 2.5 kg of propylene at 30°C. A suspension of 166 mg of neat catalyst B prepared in example 2b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 1380 g of a finely divided polymer were obtained. The interior walls of the reactor displayed no deposits. The catalyst activity was 8.3 kg of PP/g of catalyst solid per hour. The polypropylene obtained had the following properties: M_{w} = 146.000 g/mol, M_{w}/Mₙ = 3.3, melting point = 154°C.

### Example 3

### a) Synthesis of the modified MAO

55 ml of MAO (30 wt % in toluene) were diluted with 150 ml of toluene and cooled to 0°C. In a separate flask, 3.15 g of bis(pentafluorophenyl) borinic acid were dissolved in 90 ml of toluene and added to the MAO / toluene solution in such a way, that the reaction temperature did not exceed 2 °C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst C

10 g of silica support (Grace XPO2326, dried at 130 °C for 6h) were suspended in 100 ml of toluene. The suspension was cooled to 0°C and treated with 115 g of the modified MAO solution described in Example 3a. During the addition, the reaction temperature was kept at 0°C and afterwards raised to 25 °C. After continuous stirring for 1 hour, the suspension was filtered and washed 3 times with 100 ml portions of toluene and again suspended in 100 ml of toluene. In a separate flask 248 mg of rac-dimethylsilanediyl(2-methyl-4-(4'-tert-butylphenyl)indenyl)(2-isopropyl-4-(4'-tetrbutylphenyl) indenyl)zirconium dimethyl were dissolved in 40 ml of toluene and at ambient temperature treated with 11.5 g of the modified MAO solution described in Example 3a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 60 °C. This procedure was repeated 2 times. The residue was dried in vacuum until its weight remained constant. 15 g of a free flowing powder were obtained.

### c) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 93 mg of neat catalyst C prepared in example 2b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 1917 g of a finely divided polymer were obtained. The interior walls of the reactor displayed no deposits. The catalyst activity was 20.6 kg of PP/g of catalyst solid per hour. The polypropylene obtained had the following properties: M_{w} = 175.000 g/mol, M_{w}/Mₙ = 2.5, melting point = 156°C.

### Example 4

### a) Synthesis of the modified MAO

30 ml of MAO (30 wt % in toluene) were diluted with 50 ml of toluene and cooled to 0°C. In a separate flask, 6.9 g of bis(pentafluorophenyl) borinic acid were dissolved in 150 ml of toluene and added to the MAO / toluene solution in such a way, that the reaction temperature did not exceed 2 °C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst D

15 g of silica support (Grace XPO2326, dried at 130 °C for 6h) were suspended in 100 ml of toluene. The suspension was cooled to 0°C and treated with 165 g of the modified MAO solution described in Example 4a. During the addition, the reaction temperature was kept at 0°C and afterwards raised to 25 °C. After continuous stirring for 1 hour, the suspension was filtered and washed 3 times with 100 ml portions of toluene and again suspended in 100 ml of toluene. In a separate flask 316 mg of rac-dimethylsilanediyl(2-methyl-4-(4'-tert-butylphenyl)indenyl)(2-isopropyl-4-(4'-tetrbutylphenyl) indenyl)zirconium dimethyl were dissolved in 50 ml of toluene and at ambient temperature treated with 21.4 g of the modified MAO solution described in Example 4a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 60 °C. This procedure was repeated 2 times. The residue was dried in vacuum until its weight remained constant. 23 g of a free flowing powder were obtained.

### c) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 101 mg of neat catalyst D prepared in example 4b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 1730 g of a finely divided polymer were obtained. The interior walls of the reactor displayed no deposits. The catalyst activity was 17.1 kg of PP/g of catalyst solid per hour. The polypropylene obtained had the following properties: M_{w} = 196.000 g/mol, M_{w}/Mₙ = 3.0, melting point = 156°C.

### Example 5

### a) Synthesis of the modified MAO

68.5 ml of MAO (30 wt % in toluene) were diluted with 100 ml of toluene and cooled to 0°C. In a separate flask, 7.85 g of bis(pentafluorophenyl) borinic acid were dissolved in 200 ml of toluene and added to the MAO / toluene solution in such a way, that the reaction temperature did not exceed 2 °C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst E

15 g of silica support (Grace XPO2326, dried at 130 °C for 6h) were suspended in 100 ml of toluene. The suspension was cooled to 0°C and treated with 116 g of the modified MAO solution described in Example 5a. During the addition, the reaction temperature was kept at 0°C and afterwards raised to 25 °C. After continuous stirring for 1 hour, the suspension was filtered and washed 3 times with 100 ml portions of toluene and again suspended in 100 ml of toluene. In a separate flask 315 mg of rac-dimethylsilanediyl(2-methyl-4-(4'-tert-butylphenyl)indenyl)(2-isopropyl-4-(4'-tetrbutylphenyl) indenyl)zirconium dimethyl were dissolved in 50 ml of toluene and at ambient temperature treated with 15.2 g of the modified MAO solution described in Example 5a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 40 °C. This procedure was repeated 2 times. The residue was dried in vacuum until its weight remained constant. 24 g of a free flowing powder were obtained.

### c) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 82 mg of neat catalyst E prepared in example 4b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 1761 g of a finely divided polymer were obtained. The interior walls of the reactor displayed no deposits. The catalyst activity was 21.5 kg of PP/g of catalyst solid per hour. The polypropylene obtained had the following properties: M_{w} = 197.000 g/mol, M_{w}/Mₙ = 3.1, melting point = 156°C.

### Comparative Example 1

### a) Synthesis of the metallocene catalyst F

Catalyst F corresponds to catalyst A, but without borinic acid.

### b) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 158 mg of neat catalyst F in 2 ml of hexane was subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 2366 g of a finely divided polymer were obtained. The interior walls of the reactor displayed no deposits. The catalyst activity was 15.0 kg of PP/g of catalyst solid per hour. The polypropylene obtained had the following properties: M_{w} = 244.000 g/mol, M_{w}/Mₙ = 3.2, melting point = 156°C.

### c) Polymerization without scavenger

A dry 14 l reactor was flushed 3 times with nitrogen and 3 times with propylene and subsequently charged with 306 mg of hydrogen and 2.5 kg of propylene at 30°C. A suspension of 459 mg of neat catalyst F prepared in the comparative example 1 in 2 ml of hexane was subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 2300 g of a finely divided polymer were obtained. The interior walls of the reactor displayed no deposits. The catalyst activity was 5.0 kg of PP/g of catalyst solid per hour. The polypropylene obtained had the following properties: M_{w} = 282.000 g/mol, M_{w}/Mₙ = 3.7, melting point = 156°C.

### Example 6

### a) Synthesis of the modified MAO

50 ml of MAO (30 wt % in toluene) were diluted with 200 ml of toluene and cooled to 0°C. In a separate flask, 11.5 g of bis(pentafluorophenyl) borinic acid were dissolved in 100 ml of toluene and added to the MAO / toluene solution in such a way, that the reaction temperature did not exceed 2 °C. After complete addition of the bis(pentafluorophenyl) borinic acid the reaction mixture was filtered after being stirred for another hour at 0°C. The filtrate was kept over night in a refrigerator at 4°C.

### b) Synthesis of the metallocene catalyst G

18 g of silica support (Grace XPO2485, dried at 130 °C for 6h) were suspended in 100 ml of toluene. The suspension was cooled to 0°C and treated with 304 ml of the modified MAO solution described in Example 6a. During the addition, the reaction temperature was kept at 0°C and afterwards raised to 25 °C. After continuous stirring for 1 hour, the suspension was filtered and washed 3 times with 100 ml portions of toluene and again suspended in 100 ml of toluene. In a separate flask 347 mg of rac-dimethylsilanediyl-bis(2-methyl-(4-phenyl)indenyl)zirconium dichloride were suspended in 41 ml of toluene and at ambient temperature treated with 32 ml of the modified MAO solution described in Example 6a. The reaction mixture was stirred for 1 hour at ambient temperature and after that added to the silica support suspension at 15°C. The temperature was raised to 40°C and stirred for 2 hours. Subsequently the suspension was filtered, suspended in 100 ml of toluene, stirred for 30 min at 60 °C. At last the remaining solid was suspended in 100 ml of n-heptane, stirred for 30 min at 60 °C and filtered. The residue was dried in vacuum until its weight remained constant. 32 g of a free flowing powder were obtained.

### c) Polymerization

A dry 14 l reactor was flushed 3 times with nitrogen and 3 times with propylene. 10 ml (19 mmol) of a 1.9 M triisobutylaluminum solution in heptane were placed in the reactor, which was subsequently charged with 306 mg of hydrogen and 2.5 kg of propylene at 30°C. A suspension of 98 mg of neat catalyst G prepared in example 6b) in 2 ml of hexane were subsequently rinsed into the reactor with 1 kg of propylene. The reaction temperature was set at 25 °C for 10 min and subsequently raised to 65 °C at which the polymerization occurred for 1 hour. The reaction was stopped by venting the remaining propylene. 2719 g of a finely divided polymer were obtained. The interior walls of the reactor displayed no deposits. The catalyst activity was 27.7 kg of PP/g of catalyst solid per hour. The polypropylene obtained had the following properties: M_{w} = 544.000 g/mol, M_{w}/Mₙ = 4.8, melting point = 150°C.

| Example | catalyst | [Al] | [B] | [Zr] | TiBA | H₂ | Activity | Mw | Mw/ Mn | Tm₂ |
|---|---|---|---|---|---|---|---|---|---|---|
| | | wt. % | wt..% | µmol/g | | mg | Kg/gh | g/mol | | °C |
| 1c | A | 14.6 | 0.78 | 40 | yes | 306 | 26,8 | 274.000 | 3.7 | 156 |
| 2c | B | 16.6 | 0.44 | 40 | no | 306 | 8.3 | 146.000 | 3.3 | 154 |
| 3c | C | 17.9 | 0.24 | 40 | yes | 306 | 20.6 | 175.000 | 2.5 | 156 |
| 4c | D | 12.1 | 0.65 | 30 | yes | 306 | 17.1 | 196.000 | 3.0 | 156 |
| 5c | E | 13.6 | 0.36 | 30 | yes | 306 | 21.5 | 197.000 | 3.1 | 156 |
| CE 1b | F | 18.7 | 0 | 40 | yes | 306 | 15.0 | 244.000 | 3.2 | 156 |
| CE 1c | F | 18.7 | 0 | 40 | no | 306 | 5.0 | 282.000 | 3.7 | 156 |
| 6c | G | 14.6 | 0.79 | 30 | yes | 306 | 27.7 | 544.000 | 4.8 | 150 |

## Claims

1. A method of preparing a supported catalyst useful for polymerizing olefins, comprising:
(a) combining a boron acid compound_being bis(pentafluorophenyl) borinic acid with excess alkylalumoxane to produce an activator mixture; and
(b) combining the activator mixture with either:
(i) a metallocene complex, followed by calcined or chemically treated silica to give the supported catalyst; or
(ii) calcined or chemically treated silica, followed by a metallocene complex to give the supported catalyst.

2. The method according to claim 1 wherein the alkylalumoxane and boron acid compound are used in amounts that provide an aluminum to boron (Al/B) molar ratio within the range of 2:1 to 50:1.

3. The method according to claim 2 wherein the Al/B molar ratio is within the range of 5:1 to 40:1.

4. The method according to one of the preceding claims wherein the alkylalumoxane is methylalumoxane.

5. The method according to one of the preceding claims wherein the metallocene complex corresponds to formula (I), 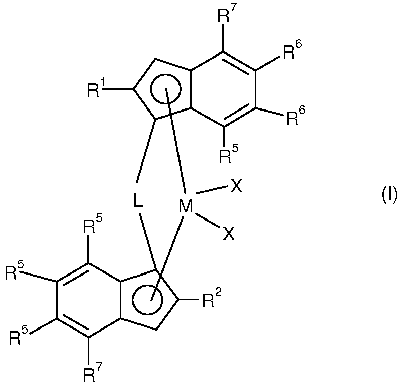 where
M is zirconium, hafnium or titanium,
X are identical or different and are each, independently of one another, hydrogen or halogen or an -R, -OR, -OSO₂CF₃, -OCOR, -SR, -NR₂ or -PR₂ group, where R is linear or branched C₁-C₂₀-alkyl, C₃-C₂₀-cycloalkyl which may be substituted by one or more C₁-C₁₀-alkyl radicals, or C₃-C₂₀-cycloalkyl, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where the two radicals X may also be joined to one another,
L is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, which may contain heteroatoms of groups 13-17 of the Periodic Table of the Elements, or a silylidene group having up to 5 silicon atoms,
R¹ is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
R² is a group of the formula -C(R³)₂R⁴, where
R³ are identical or different and are each, independently of one another, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring, and
R⁴ is hydrogen, or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
R⁵ are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, and
R⁶ are identical or different and are each, independently of one another hydrogen, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or the two radicals R⁶ may be joined to form together with the atoms connecting them a saturated or unsaturated C₅-C₂₀ ring,
R⁷ are identical or different and are each, independently of one another, halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds.

## Patentansprüche

1. Verfahren zur Herstellung eines trägergestützten Katalysators, der zum Polymerisieren von Olefinen brauchbar ist, umfassend:
(a) Kombinieren einer Verbindung einer borhaltigen Säure, die Bis(pentafluorphenyl)borinsäure ist, mit Alkylalumoxan im Überschuss, um eine Aktivatormischung zu produzieren; und
(b) Kombinieren der Aktivatormischung mit entweder
(i) einem Metallocenkomplex, gefolgt von calciniertem oder chemisch behandeltem Siliciumdioxid, um den trägergestützten Katalysator zu ergeben; oder
(ii) calciniertem oder chemisch behandeltem Siliciumdioxid, gefolgt von einem Metallocenkomplex, um den trägergestützten Katalysator zu ergeben.

2. Verfahren nach Anspruch 1, wobei das Alkylalumoxan und die Verbindung der borhaltigen Säure in Mengen verwendet werden, die ein molares Verhältnis von Aluminium zu Bor (Al/B) im Bereich von 2:1 bis 50:1 bereitstellen.

3. Verfahren nach Anspruch 2, wobei das molare Verhältnis von Al/B innerhalb des Bereichs von 5:1 bis 40:1 liegt.

4. Verfahren nach einem der vorhergehenden Ansprüche, wobei das Alkylalumoxan Methylalumoxan ist.

5. Verfahren nach einem der vorhergehenden Ansprüche, wobei der Metallocenkomplex Formel (I) entspricht, 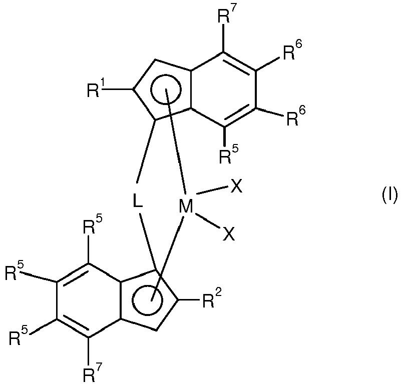 wobei
M Zirconium, Hafnium oder Titan ist,
X gleich oder unterschiedlich sind und jeweils unabhängig voneinander Wasserstoff oder Halogen oder eine Gruppe -R, -OR, -OSO₂CF₃, -OCOR, -SR, -NR₂ oder -PR₂ sind, wobei R lineares oder verzweigtes C₁- bis C₂₀-Alkyl, C₃- bis C₂₀-Cycloalkyl, das mit einem oder mehreren C₁- bis C₁₀-Alkylresten substituiert sein kann, oder C₃- bis C₂₀-Cycloalkyl, C₆- bis C₂₀-Aryl, C₇- bis C₂₀-Alkylaryl oder C₇- bis C₂₀-Arylalkyl sein kann, und ein oder mehrere Heteroatome der Gruppen 13 bis 17 des Periodensystems der Elemente oder eine oder mehrere ungesättigte Bindungen enthalten kann, wobei die beiden Reste X auch miteinander verbunden sein können,
L eine zweiwertige Brückengruppe ausgewählt aus der Gruppe bestehend aus C₁-bis C₂₀-Alkylidenresten, C₃- bis C₂₀-Cycloalkylidenresten, C₆- bis C₂₀-Arylidenresten, C₇- bis C₂₀-Alkylarylidenresten und C₇- bis C₂₀-Arylalkylidenresten ist, die Heteroatome der Gruppen 13 bis 17 des Periodensystems der Elemente oder eine Silylidengruppe mit bis zu 5 Siliciumatomen enthalten können;
R¹ lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇- bis C₂₀-Alkylaryl oder C₇- bis C₂₀-Arylalkyl ist und ein oder mehrere Heteroatome der Gruppen 13 bis 17 des Periodensystems der Elemente oder eine oder mehrere ungesättigte Bindungen enthalten kann,
R² eine Gruppe mit der Formel -C(R³)₂R⁴ ist, wobei
R³ gleich oder unterschiedlich sind und jeweils unabhängig voneinander lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇-bis C₂₀-Alkylaryl oder C₇- bis C₂₀-Arylalkyl sind und ein oder mehrere Heteroatome der Gruppen 13 bis 17 des Periodensystems der Elemente oder eine oder mehrere ungesättigte Bindungen enthalten können, oder zwei Reste R³ unter Bildung eines gesättigten oder ungesättigten C₃- bis C₂₀-Rings verbunden sein können, und
R⁴ Wasserstoff oder lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇- bis C₂₀-Alkylaryl oder C₇- bis C₂₀-Arylalkyl ist und ein oder mehrere Heteroatome der Gruppen 13 bis 17 des Periodensystems der Elemente oder eine oder mehrere ungesättigte Bindungen enthalten kann,
R⁵ gleich oder unterschiedlich sind und jeweils unabhängig voneinander Wasserstoff oder Halogen oder lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇- bis C₂₀-Alkylaryl oder C₇- bis C₂₀-Arylalkyl sind und ein oder mehrere Heteroatome der Gruppen 13 bis 17 des Periodensystems der Elemente oder eine oder mehrere ungesättigte Bindungen enthalten können, und
R⁶ gleich oder unterschiedlich sind und jeweils unabhängig voneinander Wasserstoff, lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇- bis C₂₀-Alkylaryl oder C₇- bis C₂₀-Arylalkyl sind und ein oder mehrere Heteroatome der Gruppen 13 bis 17 des Periodensystems der Elemente oder eine oder mehrere ungesättigte Bindungen enthalten können, oder die beiden Reste R⁶ zusammen mit den Atomen, die sie verbinden, einen gesättigten oder ungesättigten C₅- bis C₂₀-Ring bilden können,
R⁷ gleich oder unterschiedlich sind und jeweils unabhängig voneinander Halogen oder lineares oder verzweigtes C₁- bis C₂₀-Alkyl, C₃- bis C₂₀-Cycloalkyl, das mit einem oder mehreren C₁- bis C₁₀-Alkylresten substituiert sein kann, C₆- bis C₂₀-Aryl, C₇- bis C₂₀-Alkylaryl oder C₇- bis C₂₀-Arylalkyl sind und ein oder mehrere Heteroatome der Gruppen 13 bis 17 des Periodensystems der Elemente oder eine oder mehrere ungesättigte Bindungen enthalten können.

## Revendications

1. Procédé de préparation d'un catalyseur supporté utile pour la polymérisation d'oléfines, comprenant :
(a) la combinaison d'un composé à base d'acide de bore qui est l'acide bis(pentafluorophényl)borinique avec un excès d'alkylaluminoxane pour produire un mélange activateur ; et
(b) la combinaison du mélange activateur avec l'un ou l'autre parmi :
(i) un complexe de type métallocène, suivi d'une silice calcinée ou traitée chimiquement pour donner le catalyseur supporté ; ou
(ii) de la silice calcinée ou traitée chimiquement, suivie d'un complexe de type métallocène pour donner le catalyseur supporté.

2. Procédé selon la revendication 1, dans lequel l'alkylaluminoxane et le composé à base d'acide de bore sont utilisés en des quantités qui permettent d'obtenir un rapport molaire d'aluminium à bore (Al/B) dans la plage allant de 2:1 à 50:1.

3. Procédé selon la revendication 2, dans lequel le rapport molaire Al/B est situé dans la plage allant de 5:1 à 40:1.

4. Procédé selon l'une quelconque des revendications précédentes, dans lequel l'alkylaluminoxane est le méthylaluminoxane.

5. Procédé selon l'une quelconque des revendications précédentes, dans lequel le complexe de type métallocène correspond à la formule (I), 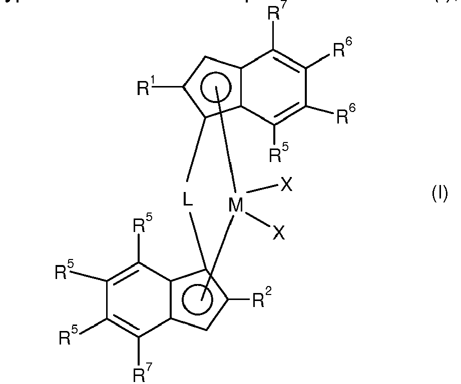 où
M représente zirconium, hafnium ou titane,
X sont identiques ou différents et représentent, chacun indépendamment l'un de l'autre, hydrogène ou halogène ou un groupe R, -OR, -OSO₂CF₃, -OCOR,-SR, -NR₂ ou -PR₂, où R représente alkyle en C₁-C₂₀ linéaire ou ramifié, cycloalkyle en C₃-C₂₀ qui peut être substitué par un ou plusieurs radicaux alkyle en C₁-C₁₀, ou cycloalkyle en C₃-C₂₀, aryle en C₆-C₂₀, alkylaryle en C₇-C₂₀ ou arylalkyle en C₇-C₂₀ et peut contenir un ou plusieurs hétéroatomes des groupes 13-17 du tableau périodique des éléments ou une ou plusieurs liaisons insaturées, les deux radicaux X pouvant également être liés l'un à l'autre,
L représente un groupe de pontage bivalent choisi dans le groupe constitué par les radicaux alkylidène en C₁-C₂₀, les radicaux cycloalkylidène en C₃-C₂₀, les radicaux arylidène en C₆-C₂₀, les radicaux alkylarylidène en C₇-C₂₀ et les radicaux arylalkylidène en C₇-C₂₀, qui peuvent contenir des hétéroatomes des groupes 13-17 du tableau périodique des éléments ou un groupe silylidène comprenant jusqu'à 5 atomes de silicium,
R¹ représente alkyle en C₁-C₂₀ linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peut contenir un ou plusieurs hétéroatomes des groupes 13-17 du tableau périodique des éléments ou une ou plusieurs liaisons insaturées,
R² représente un groupe de formule -C(R³)₂R⁴, où
R³ sont identiques ou différents et représentent, chacun indépendamment l'un de l'autre, alkyle en C₁-C₂₀ linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peuvent contenir un ou plusieurs hétéroatomes des groupes 13-17 du tableau périodique des éléments ou une ou plusieurs liaisons insaturées, ou deux radicaux R³ peuvent être liés pour former un cycle C₃-C₂₀ saturé ou insaturé et
R⁴ représente hydrogène ou alkyle en C₁-C₂₀ linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peut contenir un ou plusieurs hétéroatomes des groupes 13-17 du tableau périodique des éléments ou une ou plusieurs liaisons insaturées,
R⁵ sont identiques ou différents et représentent, chacun indépendamment l'un de l'autre, hydrogène ou halogène ou alkyle en C₁-C₂₀linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peuvent contenir un ou plusieurs hétéroatomes des groupes 13-17 du tableau périodique des éléments ou une ou plusieurs liaisons insaturées, et
R⁶ sont identiques ou différents et représentent, chacun indépendamment l'un de l'autre, hydrogène, alkyle en C₁-C₂₀ linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peuvent contenir un ou plusieurs hétéroatomes des groupes 13-17 du tableau périodique des éléments ou une ou plusieurs liaisons insaturées, ou les deux radicaux R⁶ peuvent être liés pour former avec les atomes les reliant un cycle C₅-C₂₀ saturé ou insaturé,
R⁷ sont identiques ou différents et représentent, chacun indépendamment l'un de l'autre, halogène ou alkyle en C₁-C₂₀ linéaire ou ramifié, cycloalkyle en C₃-C₂₀ qui peut être substitué par un ou plusieurs radicaux alkyle en C₁-C₁₀, aryle en C₆-C₂₀, alkylaryle en C₇-C₂₀ ou arylalkyle en C₇-C₂₀ et peuvent contenir un ou plusieurs hétéroatomes des groupes 13-17 du tableau périodique des éléments ou une ou plusieurs liaisons insaturées.
